# EUROPEAN PATENT SPECIFICATION

(11) **EP 1 748 660 B1**
(45) Date of publication and mention of the grant of the patent: **23.01.2013**
(21) Application number: 05729032.2
(22) Date of filing: 21.03.2005
(51) Int. Cl.: H04W 4/10

(54) **A PTT SERVICE SYSTEM OF METHOD THEREOF**
PTT-DIENSTSYSTEM UND VERFAHREN DAFÜR
SYSTEME DE SERVICE A POUSSOIR DE CONVERSATION ET PROCEDE CORRESPONDANT

(30) Priority: 28.04.2004 CN 200410009054
(43) Date of publication of application: 31.01.2007
(73) Proprietor: ZTE Corporation, 518057 Shenzhen, Guangdong (CN)
(72) Inventor: YANG, Peilin, ZTE Plaza, Shenzhen, Guangdong 518057 (CN); XU, Xiaokun, ZTE Plaza, Shenzhen, Guangdong 518057 (CN); HONG, Jun, ZTE Plaza, Shenzhen, Guangdong 518057 (CN)
(74) Representative: Pistolesi, Roberto
(86) International application number: PCT/CN2005/000353
(87) International publication number: WO 2005/107295

(56) References cited:
- WO-A1-03/067781
- WO-A1-2004/017651
- US-A1- 2003 235 184
- US-B1- 6 526 269
- "Push to talk over Cellular (PoC) - Architecture", 3GPP DRAFT; OMA-AD-POC_V1_0-20040204-D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Atlanta; 20040220, 20 February 2004 (2004-02-20), XP050247473, [retrieved on 2004-02-20]

## Description

### Technical Field of the Invention

The present invention relates to PTT technique in telecommunication field, particularly relates to a Push-To-Talk service system and method thereof.

### Technical Background of the Invention

Currently, a Push-To-Talk (PTT) technique brings brand-new experiences to mobile phone users. By this technique, mobile phone users can establish their own users lists and groups freely, the state of each user within the group can be displayed on the mobile phone, communication in the group can be realized, and the building of groups is able to transcend the area limitation so that mobile phone users in different cities can communicate with each other within a same group. Therefore, the PTT technique has been widely applied by part of the mobile telephone users.

The related art has been disclosed in "Push To talk over cellular (PoC)-Architecture", 3GPP DRAFT; OMA-AD-POC-V1-0-20040204-D, and US 2003/235184 A1.

WO2004086715 "VOICE AND MULTIMEDIA DISTRIBUTION USING PUSH-TO-TALK (PTT) SUBCRIBERS' GROUP" published on October 07, 2004 provides a distribution method of voice and multimedia information, in which, users can realize distribution of voice or multimedia message within group through a application server composed of two modules, i.e. PTT Module and Groups module. A user or a content provider defines a group for a group of users in the Groups module of the application server. When the content provider wants to send news information, stock information, whether forecast, sports information and commercial information etc. to the group, the content provider sends the voice or multimedia message to the application server, and then the application server sends the message to the registered users.

WO2004075581 "A METHOD AND SYSTEM FOR SETTING APPLICATION SETTINGS FOR A PUSH-TO-TALK SERVICE" published on September 02, 2004 provides a realization method of push-to-talk service, in which, a user can communicate with at least another one user using PTT service through a PTT-server providing PPT service in multimedia a system, thereby realizing PTT service in a multimedia system.

US patent document US 2004224710 "system and method for providing support services in push to talk communication platforms" published on September 12, 2006 provides a realization method of push-to-talk service, in which, a PTT client sends a request to PTT Server, then PTT Server forwards the request to a so-called high level client PTT application server, after the PTT application server finishes processing the user request, it sends a response to the client via PTT Server.

US patent document US2004192364 "Method and apparatus for accessing a network computer to establish a push-to-talk session" published on April 21, 2009 describes a method for using PTT service, in which, a wireless terminal which has registered on push -to-talk service prepares to initiate PTT session with a user on a common data network (IP network) which has not registered on the push -to-talk service, or a registered mobile user sends a unique identification of target user to PTT server, then PTT server searches the user's address on the common data network according to the unique identification, and forwards the request of the registered user to the user on the common data network.

WO2004017651 "Push-to-talk/cellular networking system" discloses the existing push -to-talk technique, in which, a mobile user connects to a dispatch server through mobile network and IP network, after mobile user pushes a PTT button to send PTT service request to the dispatch server, the dispatch server sends the PTT service request to another or a group of users through IP network and mobile network, thereby realizing PTT service.

Basically, all the above patents relating to PTT service help the user to establish PTT service through an application server processing a request sent from PTT user, and then distributing the request. This way of realizing PTT service through an application server is not adaptive for large-scale application, and its network distribution form is not flexible. Therefore, a PTT service system based on separated carrying and calling is provided, which not only has flexible distribution, but also is adaptive for large-scale application. Up to now, there is no such existing technique found that can realize the above functions.

### Summary of the Invention

The technical problem to be solved by this invention is to provide a PTT service system and method thereof, thereby enabling the application of PTT service not limit to mobile users only, and realizing various networking forms.

In order to achieve the above objects, the present invention provides a PTT service system, including a user terminal equipment and an application server, further including a control equipment and a gateway equipment, in which:
said user terminal equipment is configurated to support PTT service, and connect with said application server, said control equipment and said gateway equipment by access network;
said application server is configurated to connect with said access network and said control equipment by application server access protocol, and build relating information of users groups and lists by communicating with said user terminal equipment and store and manage them;
said control equipment is configurated to provide establishment of signaling message for said user terminal equ ipment, distribute the signaling message to other terminal equipments in the group, and control said gateway equipment by media gateway control protocol;
said gateway equipment is configurated to establish a media stream channel with said user terminal equipment according to control signaling sent by said control equipment, and distribute the media stream sent by the user terminal equipment having a right of speaking to other user terminal equipment in the group.

Further, the above PTT service system has the following feature: said user terminal equipment is anyone or several of the terminal equipments of fixed user, soft phone user, mobile user, wireless local area network user and handset phone user supporting PTT service.

Further, the above PTT service system has the following feature: said user and said access network belong to a same operator.

Further, the above PTT service system has the following feature: said PTT service system further includes users and access networks belonging to different operators, which are accessed in by inter-network exchange gateway.

Further, the above PTT service system has the following feature: said control equipment is configurated to control one or more gateway equipments, and authenticate said user terminal equipment by using user information of said application server.

In order to achieve the above objects, the present invention provides a method for realizing PTT service, including the following steps of:
(a) a source user selecting target group users, and sending a request of establishing PTT service to a control equipment through an access network;
(b) said control equipment receiving the request and authenticating the source user, after passing the authentication, distributing a call request of establishing PTT service to the target group users through the access network;
(c) said control equipment requesting related network equipment to distribute resource for the source user and target group users, and after receiving success response from at least a part of target group users, returning a requesting response message to the source user;
(d) said user terminal equipment and related gateway equipment accomplishing the resource distribution, after at least a part of target group users responding, the source user and the target users establishing a media stream channel through the access network and the gateway equipment, the gateway equipment distributing the media stream sent by the source user to the respective connected target group users;
(e) when the group users are in session, said control equipment transmitting and distributing signaling message between the group users, said gateway equipment receiving the media stream sent from the user terminal equipment having a right of speaking through the media stream channel built, and distributing the media stream to other user terminal equipment in the group;
(f) after the session is over, said control equipment, gateway equipment and user terminal equipment releasing the related resource occupied by the PTT service.

Further, the above method for realizing PTT service has the following feature: in said step (a), the source user acquires current contact list from the application server, and selects the target group users of the present PTT service from the above list.

Further, the above method for realizing PTT service has the following feature: in said step (b), said control equipment authenticates the source user through inquiring the application server for the configuration information of the source user.

Further, the above method for realizing PTT service has the following feature: in said step (b), when the group users connect with two or more gateway equipments respectively, the control equipment selects a gateway equipment from the above multiple gateway equipments which connects with the most users of the group users, and establishes the media stream channel with the group users.

Further, the above method for realizing PTT service has the following feature: in the process of distributing resources, said control equipment acquires the resource allocation condition from the gateway equipment, then notifies the resource allocation condition to the source user and target group users, and acquires the resource allocation condition of the PTT service of this time by the source user and destination user from the source user and destination user.

The technical effects of the present invention lie in that: the PTT service system of the present invention employs the control and carrying separation technique, which makes the PTT service system of this form have advantages in many aspects. The present invention overcomes the shortcoming of existing PTT system by fully using the technical feature of control and media being separated each other, thereby realizing the enhanced PTT service function, providing convenience for operators to construct various and flexible PTT networks according to the specific geographical factors and the density of PTT service users , performing the second development according to the market requirements, supporting more future service features, and also solving the problem of realizing the PTT service across networks. The present invention has the following features:

Firstly, there is great flexibility in network deploying. Generally speaking, most PTT service groups are centralized in one region, only few part of them locate in different regions, therefore, the PTT session media is also centralized in one region. By employing the technique of calling and carrying separated each other, the server for processing PTT service is divided into control equipment and gateway equipment; through the form of one control equipment controlling several gateway equipments, the gateway equipments are distributed into different areas, and the gateway equipments are collectively controlled by one or more control equipments, thereby the media stream delay in packet network and the traffic in packet network can be reduced, and disaster-tolerance in different area can also be realized, therefore avoiding the situation that the PTT service is unable to operate due to the collapse of one PTT service server. For example, during the initial stage of construction, there are few PTT users, a city is usually a non -dense city, therefore, it is possible to set the control equipment and gateway equipment in central city, and to set gateway equipments in the peripheral cities, and the PTT service is realized through the control equipment in central city controlling the gateway equipments in peripheral cities; with the expansion of city scale, the central city becomes dense city, so the PTT service can be realized by employing conjugated control equipments and gateway equipments in central city, and can also be realized by employing multiple control equipments and gateway equipments, in the peripheral cities, control equipment or only the gateway equipments can be set according to actual conditions. Thus, it can meet the requirements for distributing network in initial st age, and at the same time, it can meet the requirements for increased scale and increased users.

Furthermore, the present system employs the technique of control and carrying separated each other, thereby not only realizing the service of Push -to-talk in mobile communication, but also expanding its application to the platforms of WLAN, PHS, fixed user and soft phone, making the group users being diverse, bringing about convenience for the user, and improving the market competitive power of the network operator.

### Brief Description of the Drawings

Fig.1 is the system diagram for realizing the PTT service of present invention;
Fig.2 is the first embodiment of present invention, describing the system diagram for realizing PTT service when users belong to the same operator;
Fig.3 is the second embodiment of present invention, describing the system diagram for realizing PTT service when users belong to different operators;
Fig.4 is the third embodiment of present invention, describing the system diagram for realiz ing PTT service when one control equipment controls several gateway equipments;
Fig.5 is the flowchart of the method in the embodiments of the present invention.

### Preferred Embodiments of the Invention

Next, the embodiments of the present invention will be described in detail in combination with drawings.

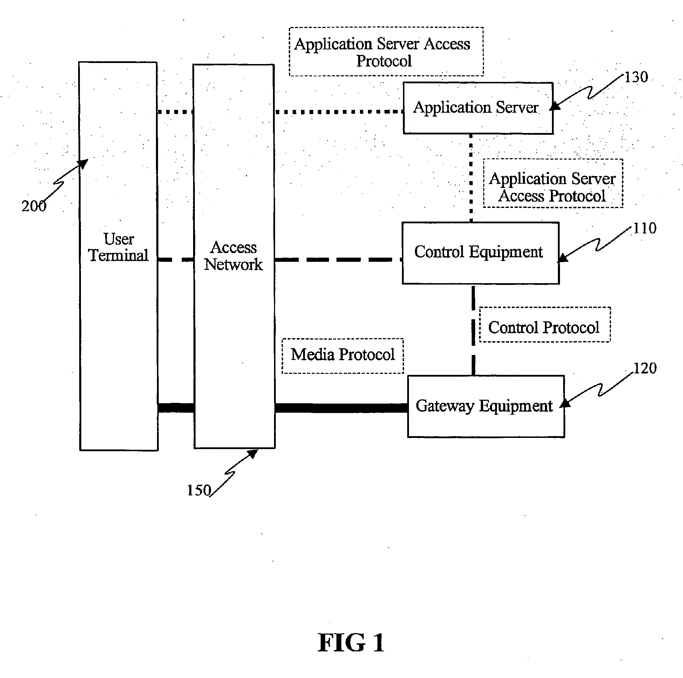

The system of present invention is a PTT service system employing the technique of calling and carrying separated each other with its system principle being shown in fig. 1, which is adaptive for fixed user, soft phone user, mobile user, WLAN user and PHS user supporting PTT service to establish group relations; the system also supports the operators who operated for one or several types of the users; for the users in different networks, group relations can also be established through the negotiation between the network operators. Essentially speaking, the present invention realizes the PTT service system carried in full network by employing the mannerof control and media separated each other.

As shown in the drawings, the system is mainly composed of control equipment 110, gateway equipment 120, application server 130 and user terminal equipment 200, in which, the user terminal equipment 200 is connected to the control equipment 110, the gateway equipment 120 and the application server 130 through wired or wireless access network 150, the application server 130 is connected to the access network 150 and control equipment 110 through application server access protocol, wherein:

The control equipment 110 is used for authenticating the user terminal equipment, providing the establishment of signaling message, distributing the signaling message to other user terminal equipments within the group, and controlling the gateway equipment 120 through the media gateway co ntrol protocol;

The gateway equipment 120 is used for establishing media stream channel with user terminal equipment according to the control signaling sent from the control equipment, and distributing the media stream sent from a certain user terminal equipment to other user terminal equipments within the group;

The application server 130 is used for interacting with user terminal equipment 200, and establishing, storing and managing the user group and related list information;

The user terminal equipment 200 includes fixed terminal user, soft phone user, mobile user, WLAN user, PHS user that support the PTT service, and it can belong to the same operator or different operators.

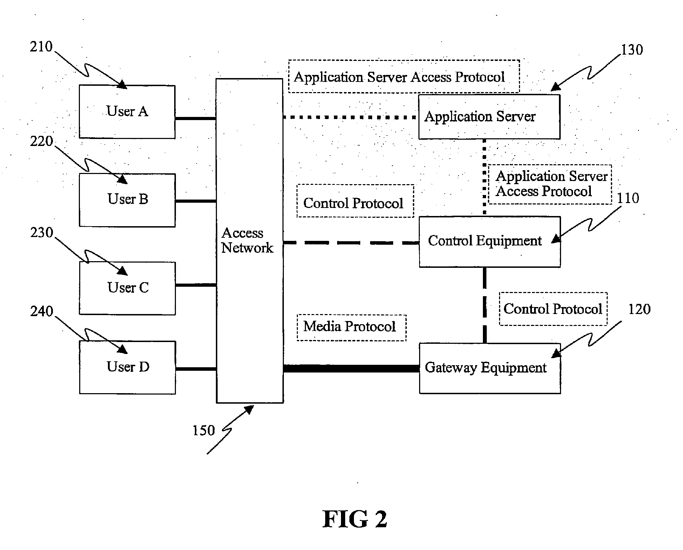

For the users of the same operator, no matter the operator carries one or two or even more networks, all of them can be realized by this system, the realizing manner is shown in fig.2, in which, all the various users of a same operator access the wired or wireless switch network 150 of the operator.

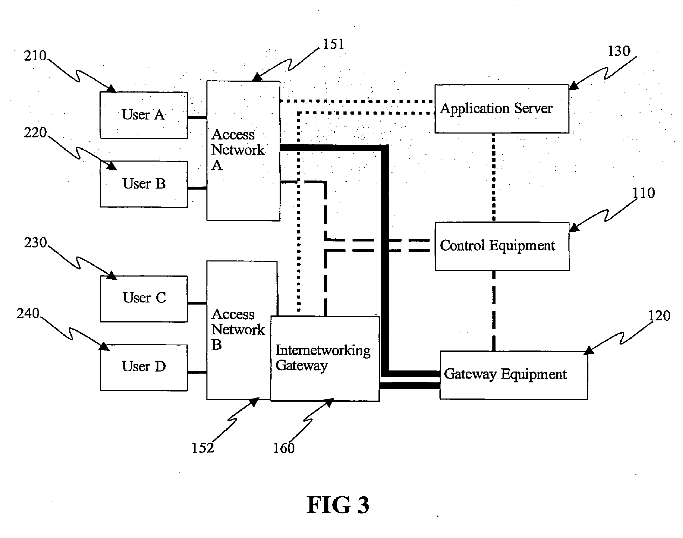

For the users of different operat ors, they are realized through such equipment as gateway, the realizing manner is shown in fig.3, in which, the access network B 152 which belongs to a different operator with the access network A151 accesses access PTT system through inter-networking gateway 160, and the application server 130, control equipment 110 and gateway equipment 120 are all connected to the inter-networking gateway 160.

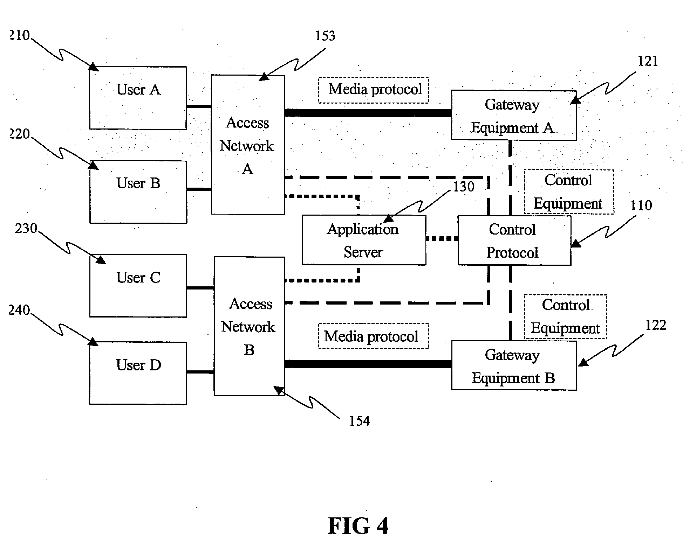

The differences between the PTT service of the present invention and the existing PTT service are: the present PTT service system realizes the separation of PTT service control and carrying, realizes the operation in full network, enabling it not limited to the mobile network. Furthermore, by separating the control and carrying, the present PTT service system is able to deploy the number of the gateway equipments flexibly according to the density of the PTT user group and the distribution condition in central city and peripheral cities, realizing that one control equipment controls several gateway equipments. As shown in fig.4, two gateway equipments 121 and 122 are connected to access network A 153 and access network B 154 respectively, and both are connected to the control equipment 110. Certainly, the control equipment and gateway equipment can either be set one b y one, or multiple to multiple.

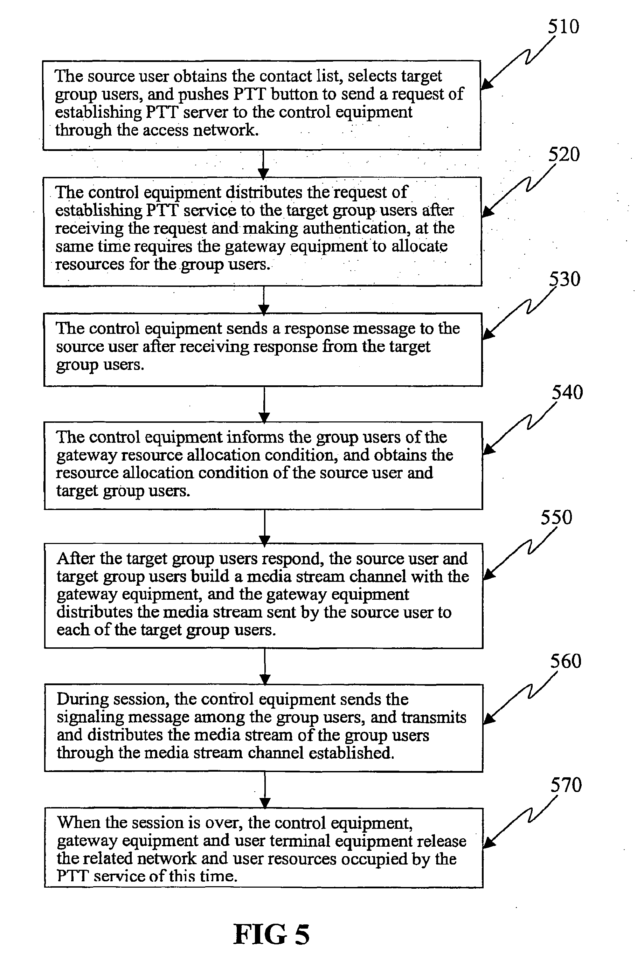

Fig.5 is the basic flowchart of the embodiment of the present invention, including the following steps of:
Step 510, the source user obtaining the current contact list from the application server in real time, selecting a g roup of users as the target group users, and pushing the PTT button to send a request for establishing PTT service to the control equipment through access network;
Step 520, the control equipment inquiring for the source user attribute from the application server and authenticating the source user attribute after receiving the PTT service request, after the authentication being passed, requesting related gateway equipments to allocate resources for the source user and the target group users through distributing a call request of establishing PTT service to the target group users;
Step 530, the control equipment sending a response message to the source user through access network after receiving response of success from all or part of the target group users;
Step 540, the control equipment notifying the resource allocation condition obtained from related gateway equipment to the source user and target group users, and obtaining the resource allocation condition for the PTT service of this time from the source user and target group users;
Step 550, after the resource allocation is accomplished and the target group users respond, the control equipment notifying the status to the source user, the source user and target group users establishing a media stream chan nel with gateway equipment through the access network, the gateway equipment distributing the media stream sent from the source user to each of the connected target group users, and performing the PTT talk.
Step 560, in the session process of PTT service, sending and distributing the signaling message between the group users (including the source user and target group user) by the control equipment, the gateway equipment receiving the media stream sent from user terminal with the right of speaking, and dist ributes the media stream to other user terminal equipments in the group;
Step 570, when the session is over, the control equipment, gateway equipment and user terminal releasing the related network and user resources occupied by the PTT service of this tim e.

In order to describe the PTT service visually, fig.2 shows the typical flowchart of realizing PTT service by user A 210 and user B 220, fig.3 shows the typical flowchart of realizing PTT service by user A 210, user B 220 and user C 230, and fig.4 shows the typical flowchart of realizing PTT service by user A 210 and user C 230 and user D 240 which belong to different gateways.

First embodiment, fig.2 shows a situation where user A 210 and user B 220 realize PTT service:
Firstly, the following basis conditions are assumed:
   - both users A and B are users adaptive for the PTT service system.
   - user A adds user B etc. to its own group in the application server (130).
   - users A and B have no group call-in limitation.
   - network common resources (such as tone, number receiver etc.) are all in the equipment.
   - users A and B belong to a same operator.

The major operation procedures include the following steps not shown in the figures of:
S 101, user A 210 pushing PTT button to initiate a request of establishing PTT service for user B 220 to control equipment 110 through access network 150;
S 102, the control equipment 110 checking the attribute of user A 210 after receiving service request from user A 210, after the authorization is passed, sending a request of establishing PTT service to user B 220 through access networ k 150 ;
S103, the control equipment 110 notifying the gateway equipment 120 of the request that user A 210 asks for establishing the PTT service, and ordering the gateway equipment 120 to allocate corresponding resource for this session and report resource allocation situation;
S104, the control equipment 110 notifying the gateway 120 of the request of establishing PTT service with user B 220, and ordering the gateway equipment 120 to allocate corresponding session resources and report the resource allocati on situation;
S 105, the control equipment 110 responding to the request of establishing PTT service to user A 210 through the access network 150 after receiving the success response for the request of establishing PTT service from user B 220;
S 106, the control equipment 110 notifying user B 220 that the resource required for establishing the session has been allocated successfully through access network 150;
S107, user terminal A 210 notifying the control equipment 110 that the resource has been allocated successfully through access network 150 after receiving a request response from the control equipment 110,;
S 108, the control equipment 110 notifying user A 210 that the resource required for establishing the session has been allocated successfully throug h access network 150;
S109, user terminal B 220 notifying the control equipment 110 that the resource has been prepared through access network 150;
S 110, user terminal B 220 notifying the control equipment 110 that user B 220 is being promoted through acc ess network 150;
S111, the control equipment 110 notifying user A 210 that user B 220 is being promoted through access network 150;
S 112, user terminal B 220 notifying the control equipment 110 that user B 220 has responded through access network 150;
S113, the control equipment 110 notifying user A 210 that user B 220 has responded through access network 150;
S 114, user A 210 establishing media stream channel with the gateway equipment 120 through access network 150;
S 115, the gateway equipment 120 establishing session media stream channel with user B 220 through access network 150;
S 116, user A 210 sending the media stream to the gateway equipment 120, then the gateway equipment 120 distributing the media stream to user B 220;
S 117, user A 210 releasing the PTT button, and notifying it to the control equipment 110 through access network 150;
S 118, user B 220 pushing the PTT button, and notifying it to the control equipment 110 through access network 150, and sending the media stream through the media stream channel established with the gateway equipment 120;
S 119, the gateway equipment 120 distributing the media stream to user A 210 through access network 150;
S120, user B 220 releasing the PTT button, and notifying it to the control equipment 110 through access network 150;
S120, when the session is over, the control equipment 110 being notified to notify the gateway equipment 120 to release the session resource allocated for the PTT service of this time;
S121, users A 210 and B 220 exiting from the PTT ser vice of this time.

Embodiment 2: fig.3 shows a situation that users A, B, C and D of different operators realize the PTT service, in which, it is supposed that the PTT service is provided by operator A, users A and B belong to the operator A, and users C and D belong to operator B.

Similarly, first supposing the following basic conditions:
- users A, B and C are all users adaptive for the PTT service system.
- user A adds users B and C etc. to its own group in application server (130).
- users A, B and C have no group call-in limitation.
- all network common resources (tone, number receiver etc.) are in the equipments.
- users A, B and C belong to the same operator.

The major operation procedures of user A 210, user B220 and user C 230 realizing the PTT service include the following steps not shown in the figures of:
S 201, user A 210 pushing the PTT button to initiate a request of establishing PTT service for user B 220 and user C 230 to the control equipment 110 through access network A 151 and communication gateway 160;
S 202, the control equipment 110 requesting for the attribute of user A from the application server after receiving the PTT service request sent from user A, after the authentication being passed, the control equipment 110 sending requests for establishing PTT servic e to user B 220 through the access network A 151, and to user C 230 through the inter-networking gateway 160 and access network B 152;
S203, the control equipment 110 notifying the gateway equipment 120 of the request of user A 210 establishing PTT service, and ordering the gateway equipment 120 to allocate corresponding resources for this session and then report the resource allocation situation;
S204, the control equipment 110 notifying the gateway 120 of the request of establishing PTT service with user B 220, and notifying the gateway equipment 120 to allocate corresponding session resources and report the resource allocation situation;
S205, the control equipment 110 notifying the gateway 120 of the request of establishing PTT service with user C 230, a nd notifying the gateway equipment 120 to allocate corresponding session resources and report the resource allocation situation;
S 206, the control equipment 110 responding to the request of establishing PTT service to user A210 through the access network A 151 after receiving a response to the request of establishing PTT service from user B220;
S207, the control equipment 110 notifying user A 210 through the access network A 151 after receiving a response to the request of establishing PTT service from user C230,;
S208, the control equipment 110 notifying user B 220 that the resources required for establishing the session have been allocated successfully through the access network A 151;
S209, the control equipment 110 notifying user C 230 that the resources required for establishing the session have been allocated successfully through the inter-networking gateway 160 and access network B 152;
S210, user terminal A 210 notifying the control equipment 110 that the resources have been finished completed preparat ion through access network A 151 after receiving a response to request from the control equipment 110,;
S 211, the control equipment 110 notifying user A 210 that the resources required for establishing the session have been allocated successfully through the access network A 151;
S212, user terminal B 220 notifying the control equipment 110 that the resources have been completed preparation through the access network A 151;
S213, user terminal C 230 notifying the control equipment 110 that the resources have been completed preparation through the inter -networking 160 and access network B 152;
S 214, user terminal B 220 notifying the control equipment 110 through access network A 151 that user B 220 is being promoted;
S215, user terminal C 230 notifying the control equipment 110 through the inter-networking gateway 160 and access network B 152 that user C 230 is being promoted;
S 216, the control equipment 110 notifying user A 210 through the access network A 151 that user B 220 is being promoted;
S217, user terminal B 220 notifying the control equipment 110 through the access network A 151 that user B 220 has answered;
S218, user terminal C 230 notifying the control equipment 110 through the inter-networking gateway 160 and access network 152 that user C 230 has answered;
S219, the control equipment 110 notifying user A 210 through access network A 151 that user B 220 has answered;
S220, the control equipment 110 notifying user A 210 through the inter-networking gateway 160 and access network B 152 that user C 230 has answered;
S221, user A 210 establishing a media stream channel with gateway equipment 120 through access network A 151;
S222, gateway equipment 120 establishing a session media stream channel with user B 220 through access network A 151;
S223, gateway equipment 120 establishing a session media stream channel with user C 230 through inter-networking gateway 160 and access network B 152;
S224, user A 210 sending media stream to gateway equipment 120, then the gateway equipment 120 media stream distributing the media stream through the media channel established with user B 220 and user C 230 respectively;
S225, user A 210 releasing the PTT button, releasing the right of speaking, and notifying the control equipment 110 through access network A 151;
S226, user B 220 pushing the PTT button and obtaining the right of speaking, then notifying the control equipment 110 through access network A 151, and sending the media stream through the media stream channel established with the gateway equipment 120;
S227, the gateway equipment 120 distributing the media stream received from user B 220 to user A 210 and user C 230 through the media channel established with user A 210 and user C 230;
S228, user B 220 releasing the PTT button, and releasing the right of speak ing, then notifying the control equipment 110 through access network A 151;
S229, if users not having required speaking pushes the PTT button, then the session being finished, and notifying the control equipment 110 to notify the gateway equipment 120 to release the session resources allocated for PTT service of this time;
S230, user A 210, B 220 and user C 230 exiting from PTT session service of this time.

Users B 220 and C 230 are actually not in sequent orders, the sequence of users B 220 and C 230 is only a assumed situation in this embodiment. In addition, when user A and its group members B and C belong to the same operator, the only thing needs to do is just getting rid of the inter -networking equipments, such as the gateway.

Step 42, one of the source users or target group users in the group requesting for speaking, this user pushing the PTT service button, obtaining the right of speaking, and establishing media stream with the gateway equipment; the gateway equipment distributing the media stream to related users according to the related user information provided by the control equipment;

Step 42, the user requesting for speaking completing the speaking, then releasing the PTT service button.

Embodiment 3, fig.4 shows the situation that user A 210, u ser C 230 and user D 240 which belong to different gateways realize the PTT service:
Similarly, first supposing the following basic conditions:
   - users A, C and D are all users adaptive to the PTT service system.
   - user A adds users C and D etc. to its own g roup in the application server (130).
   - user A, C and D have no group call-in limitation.
   - network common resources (tone, number receiver etc.) are all in the equipments.
   - users A, C and D belong to the same operator.
   - there is a gateway equipment A (121) in the area where user A locates, and there is a gateway equipment B 122 in the area where users C and D locate.

The major operation procedures of the PTT service include the following steps not shown in the figures of:
S 301, user A 210 pushing the PTT button to initiate a request of establishing PTT service for user C 230 and user D 240 toward the control equipment 110 through the access network 153;
S 302, the control equipment 110 inquiring for the attribute of user A 210 toward the application server after receiving a service request from user A, after the authentication being passed, sending the request of establishing PTT service to users C 230 and D240 respectively through the access network B 154;
S303, the control equipment 110 finding that gateway both equipment A 121 and gateway equipment B 122 are able to process the session media stream of PTT service of this time, but there are two users in the area where gateway equipment B 122 locates, then, the control equipment 110 selecting the gateway equipment B 122 as the gateway for processing media stream of this session, and notifying the gateway equipment B 122 that user A 210 requests for establishing PTT service, and ordering the gateway equipment B 122 to allocate corresponding resources for this session and then report the resource allocation situation;
S304, the control equipment 110 notifying the gateway equipment B 122 of the request of establishing the PTT service with user C 230, and notifying the gateway equipment B 122 to allocate corresponding session resources a nd then report the resource allocation situation;
S305, the control equipment 110 notifying the gateway B 122 of the request of establishing the PTT service with user D 240, and notifying the gateway equipment B 122 to allocate corresponding session resourc es and the report the resource allocation situation;
S 306, the control equipment 110 responding to the request of establishing PTT service to user A 210 through access network A 153 after receiving a response of successful request for establishing PTT service from user C 230,;
S307, the control equipment 110 notifying user A 210 through access network A 153 after receiving a response of successful request for establishing PTT service from user D240;
S308, the control equipment 110 notifying user C 230 tha t the resources required for establishing the session have been allocated successfully through access network B 154;
S309, the control equipment 110 notifying user D 240 that the resources required for establishing the session have been allocated successfully through access network B 154;
S310, user terminal A 210 notifying the control equipment 110 that the resources have been finished preparation through access network A153 after receiving the response to request from the control equipment 110;
S 311, the control equipment 110 notifying user A 210 that the resources required for establishing the session have been allocated successfully through access network A 153;
S312, user terminal C 230 notifying the control equipment 110 that the resources have been finished preparation through access network B 154;
S313, user terminal D 240 notifying the control equipment 110 that the resources have been finished preparation through access network B 154;
S 314, user terminal C 230 notifying the control equipment 110 that the user C 230 is being promoted through access network B 154;
S315, user terminal D 240 notifying the control equipment 110 that user D 240 is being promoted through access network B 154;
S 316, the control equipment 110 notifying user A 210 that user C 230 is being promoted through access network A 153;
S317, user terminal C 230 notifying the control equipment 110 through access network B 154 that user C 230 has answered;
S318, user terminal D 240 notifying the control equipment 110 through access network B 154 that user D 240 has answered;
S319, the control equipment 110 notifying user A 210 through access network A 153 that user C 230 has answered;
S320, the control equipment 110 notifying user A 210 through access network A 153 that user D 240 has answered;
S321, user A 210 establishing the media stream channel with gateway equipment B 122 through access network A 153;
S322, gateway equipment B 122 establishing the session media stream channel with user C 230 through access network B 154;
S323, gateway equipment B 122 establishing the session media stream channel with user D 240 through access network B 154;
S324, user A 210 sending the media stream to gateway equipment B 122, then the gateway equipment B 122 distributing the media stream through the media channels established with user C 230 and user D 240 respectively;
S325, user A 210 releasing the PTT button and the right of speaking, and notifying the control equipment 110 through access network A 153;
S326, user C 230 pushing the PTT button, obtaining the right of speaking, notifying the control equipment 110 through access network B 154, and sending the media stream through the media stream channel established with gateway equipment B122;
S327, gateway equipment B 122 distributing the media stre am received from user C230 to user A 210 and user D 240 through the media channels established with user A 210 and user D 240;
S328, user C 230 releasing the PTT button and the right of speaking, and notifying the control equipment 110 through access network B 154;
S329, if there is no user who requests for right of speaking pushes the PTT button, then the session being over, and notifying the control equipment 110 to notify gateway equipment B 122 to release the session resources allocated for PTT service of this time;
S330, users A 210, C230 and D 240 exiting from the PTT session service.

Users C 230 and D240 actually are not in sequence, in this embodiment, the sequence of users C 230 and D240 is only a supposed situation.

In addition, although three embodiments are disclosed above, this invention does not set limitation to the session procedures of the PT service and the specific operation modes of pushing button.

In the above, the operation principles of the present invention are described in detail, and several typical network structure flowcharts are also provided. However, they are only concrete examples employed for the convenience of understanding, and should not be taken as limitations to the scope of the present invention. Similarly, any possible equal modifications and substitutions made according to the descriptions of the technical schemes and preferred embodiments of the present invention should be covered in the protection scope of the claims of the present invention.

### Industrial Applicability of the Invention

The present invention provides a PTT service system and method thereof, which enables the application of the PTT service not limit to the mobile users. By employing the present invention, many kinds of network modes can be realized, and the PTT service can be realized in the terminal equipments which support the PTT service, such as the fixed user, soft phone user, mobile user, WLAN user and PHS user etc.

## Claims

1. A PTT service system, including a user terminal equipment (200) and an application server (130), **characterized by** further including a control equipment (110) and a gateway equipment (120), in which:
said user terminal equipment (200) is configured to support PTT service, and connect with said application server (130), said control equipment (110) and said gateway equipment (120) by access network (150, 151, 152, 153 and 154);
said application server (130) is configured to connect with said access network (150, 151, 152, 153 and 154) and said control equipment (110) by an application server access protocol, build relating information of users groups and lists by communicating with said user terminal equipment (200), store and manage the information;
said control equipment (110) is configured to provide establishment of signaling message for said user terminal equipment (200), distribute the signaling message to other terminal equipments in the group, and control said gateway equipment (120) by media gateway control protocol;
said gateway equipment (120) is configured to establish a media stream channel with said user terminal equipment (200) according to control signaling sent by said control equipment (110), and distribute the media stream sent by the user terminal equipment (200) having a right of speaking to other user terminal equipments in the group.

2. The PTT service system of claim 1, wherein:
said user terminal equipment is anyone or several of the terminal equipments of fixed user, soft phone user, mobile user, wireless local area network user and handset phone user supporting PTT service.

3. The PTT service system of claim 2, wherein:
said user and said access network belong to a same operator.

4. The PTT service system of claim 3, wherein:
said PTT service system further includes users and access networks belonging to different operators, which are accessed in by inter-network exchange gateway.

5. The PTT service system of claims 2, 3 or 4, wherein:
said control equipment is configured to control one or more gateway equipments, and authenticate said user terminal equipment by using user information of said application server.

6. A method for realizing a PTT service, **characterized by** including the following steps of:
(a) a source user selecting target group users, and sending a request of establishing PTT service to a control equipment through an access network (510);
(b) said control equipment receiving the request and authenticating the source user, after passing the authentication, distributing a call request of establishing PTT service to the target group users through the access network (520);
(c) said control equipment requesting related network equipment to distribute resource for the source user and target group users, and after receiving success response from at least a part of the target group users, returning a requesting response message to the source user (530);
(d) said user terminal equipment and related gateway equipment accomplishing the resource distribution, after at least a part of target group users responding, the source user and the target users establishing a media stream channel through the access network and the gateway equipment, the gateway equipment distributing the media stream sent by the source user to respective connected target group users (550);
(e) when the group users are in session, said control equipment transmitting and distributing signaling message between the group users, said gateway equipment receiving the media stream sent from the user terminal equipment having a right of speaking through the media stream channel built, and distributing the media stream to other user terminal equipment in the group (560); and
(f) after the session is over, said control equipment, gateway equipment and user terminal equipment releasing the related resource occupied by the PTT service (570).

7. The method for realizing the PTT service of claim 6, wherein
in said step (a), the source user acquires current contact list from the application server, and selects the target group users of the present PTT service from the list.

8. The method for realizing the PTT service of claim 6, wherein
in said step (b), said control equipment authenticates the source user through inquiring the application server for the configuration information of the source user.

9. The method for realizing the PTT service of claim 6, wherein
in said step (b), when the group users connect with two or more gateway equipments respectively, the control equipment selects a gateway equipment from the above multiple gateway equipments which connects with the most users of the group users, and establishes the media stream channel with the group users.

10. The method for realizing the PTT service of claim 6, wherein
in the process of distributing resources, said control equipment acquires the resource allocation condition from the gateway equipment, then notifies the resource allocation condition to the source user and target group users, and acquires the resource allocation condition of the PTT service of this time from the source user and target group users (540).

## Patentansprüche

1. PTT-Dienstsystem, enthaltend ein Anwenderendgerät (200) und einen Applikationsserver (130), **dadurch gekennzeichnet, dass** es ferner ein Steuergerät (110) und ein Gateway-Gerät (120) enthält, wobei:
das Anwendergerät (200) zur Unterstützung eines PTT-Dienstes konfiguriert ist durch ein Zugangsnetz (150, 151, 152, 153 und 154) an den Applikationsserver (130), das Steuergerät (110) und das Gateway-Gerät (120) angeschlossen ist;
wobei der Applikationsserver (130) für einen Anschluss an das Zugangsnetz (150, 151, 152, 153 und 154) und das Steuergerät (100) durch ein Applikationsserver-Zugangsprotokoll, zum Erstellen zugehöriger Informationen von Anwendergruppen und Listen durch Kommunikation mit dem Anwenderendgerät (200), zum Speichern und Verwalten der Informationen konfiguriert ist;
wobei das Steuergerät (110) zum Einrichten einer Signalisierungsnachricht für das Anwenderendgerät (200), Verteilen der Signalisierungsnachricht an andere Endgeräte in der Gruppe und Steuern des Gateway-Geräts (120) durch ein Medien-Gateway-Steuerprotokoll konfiguriert ist;
wobei das Gateway-Gerät (120) zum Einrichten eines Medienstromkanals mit dem Anwenderendgerät (200) gemäß der Steuerungssignalisierung, die von dem Steuergerät (110) gesendet wird, und Verteilen des Medienstroms, der vom Anwenderendgerät (200) gesendet wird, das berechtigt ist, mit anderen Anwenderendgeräten in der Gruppe zu sprechen, konfiguriert ist.

2. PTT-Dienstsystem nach Anspruch 1, wobei :
das Anwenderendgerät eines oder mehrere der Endgeräte eines Festnetztelefonanwenders, Soft-Phone-Anwenders, Mobiltelefonanwenders, drahtlosen lokalen Netzanwenders und Handapparatanwenders ist, die einen PTT-Dienst unterstützten.

3. PTT-Dienstsystem nach Anspruch 2, wobei:
der Anwender und das Zugangsnetz zum selben Betreiber gehören.

4. PTT-Dienstsystem nach Anspruch 3, wobei:
das PTT-Dienstsystem ferner Anwender und Zugangsnetze enthält, die zu verschiedenen Betreibern gehören, auf die durch ein Austausch-Gateway zwischen Netzen zugegriffen wird.

5. PTT-Dienstsystem nach Ansprüchen 2, 3 oder 4, wobei:
das Steuergerät zum Steuern eines oder mehrerer Gateway-Geräte(s) und Authentifizieren des Anwenderendgeräts durch Verwenden von Anwenderinformationen des Applikationsservers konfiguriert ist.

6. Verfahren zum Ausrühren eines PTT-Dienstes, **dadurch gekennzeichnet, dass** es die folgenden Schritte enthält:
(a) ein Quellanwender wählt Zielgruppenamvender aus und sendet eine Anfrage zum Einrichten eines PTT-Dienstes über ein Zugangsnetz (510) an ein Steuergerät;
(b) das Steuergerät empfängt die Anfrage und authentifiziert den Quellanwender und sendet nach der Authentifizierung eine Anrufanfrage zum Einrichten eines PTT-Dienstes durch das Zugangsnetz (520) zu den Zielgruppenanwendern;
(c) das Steuergerät fordert ein zugehöriges Netzgerät auf, Ressourcen für den Quellanwender und die Zielgruppenanwender zu verteilen, und sendet nach Empfang einer Erfolgsantwort von mindestens einem Teil der Zielgruppenanwender eine Anfrageantwortnachricht zu dem Quellanwender (530) zurück;
(d) das Anwenderendgerät und zugehörige Gateway-gerät führen die Ressourcenverteilung durch, nachdem zumindest ein Teil der Zielgruppenanwender geantwortet hat, der Quellanwender und die Zielanwender errichten einen Medienstromkanal durch das Zugangsnetz und das Gateway-Gerät, das Gateway-Gerät verteilt den Medienstrom, der von Quellanwender gesendet wird, an entsprechende angeschlossene Zielgruppenanwender (550) ;
(e) wenn die Gruppenanwender in einer Sitzung sind, überträgt und verteilt das Steuergerät eine Signalisierungsnachricht zwischen den Gruppenanwendern, das Gateway-Gerät empfängt den Medienstrom, der von dem Anwenderendgerät gesendet wird, das berechtigt ist, über den errichteten Medienstromkanal zu sprechen, und verteilt den Medienstrom zu anderen Anwenderendgeräten in der Gruppe (560); und
(f) sobald die Sitzung beendet ist, geben das Steuergerät, das Gateway-Gerät und das Anwenderendgerät die zugehörige Ressource, die vom PTT-Dienst (570) belegt ist, frei.

7. Verfahren zum Durchführen eines PTT-Dienstes nach Anspruch 6, wobei
in Schritt (a) der Quellanwender eine aktuelle Kontaktliste vom Applikationsserver erhält und die Zielgruppenanwender des gegenwärtigen PTT-Dienstes aus der Liste währt.

8. Verfahren zum Durchführen eines PTT-Dienstes nach Anspruch 6, wobei
in Schritt (b) das Steuergerät den Quellanwender durch Abfragen der Konfigurationsinformationen des Quellanwenders vom Applikationsserver authentifiziert.

9. Verfahren zum Durchführen eines PTT-Dienstes nach Anspruch 6, wobei
in Schritt (b), wenn die Gruppenanwender an jeweils zwei oder mehr Gateway-Geräte angeschlossen sind, das Steuergerät ein Gateway-Gerät aus den oben genannten mehreren Gateway-Geräten wählt, das an die meisten Anwender der Gruppenanwender angeschlossen ist, und den Medienstromkanal mit den Gruppenanwendern errichtet.

10. Verfahren zum Durchführen eines PTT-Dienstes nach Anspruch 6, wobei
in dem Prozess zum Verteilen von Ressourcen das Steuergerät die Ressourcenzuordnungsbedingung vom Gateway-Gerät erlangt, dann die Ressourcenzuordnungsbedingung dem Quellanwender und den Zielgruppenanwendern mitteilt und die Ressourcenzuordnungsbedingung des PTT-Dienstes zu diesem Zeitpunkt von dem Quellanwender und den Zielgruppenanwendern (540) erlangt.

## Revendications

1. Système de service à poussoir PTT, incluant un équipement de terminal d'utilisateur (200) et un serveur d'application (130), **caractérisé en ce qu'**il comprend en outre un équipement de commande (110) et un équipement de passerelle (120), dans lequel :
ledit équipement de terminal d'utilisateur (200) est configuré de manière à prendre en charge le service à poussoir PTT, et à se connecter audit serveur d'application (130), audit équipement de commande (110) et audit équipement de passerelle (120) par le biais d'un réseau d'accès (150, 151, 152, 153 et 154) ;
ledit serveur d'application (130) est configuré de manière à se connecter audit réseau d'accès (150, 151, 152, 153 et 154) et audit équipement de commande (110) par le biais d'un protocole d'accès de serveur d'application, à créer des informations connexes à des listes et groupes d'utilisateurs en communiquant avec ledit équipement de terminal d'utilisateur (200), et à stocker et gérer les informations ;
ledit équipement de commande (110) est configuré de manière à mettre en oeuvre l'établissement d'un message de signalisation pour ledit équipement de terminal d'utilisateur (200), à distribuer le message de signalisation à d'autres équipements de terminaux dans le groupe, et à commander ledit équipement de passerelle (120) par le biais d'un protocole de commande de passerelle multimédia ;
ledit équipement de passerelle (120) est configuré de manière à établir un canal de flux multimédia avec ledit équipement de terminal d'utilisateur (200) selon la signalisation de commande envoyée par ledit équipement de commande (110), et à distribuer le flux multimédia envoyé par l'équipement de terminal d'utilisateur (200) autorisé à communiquer avec d'autres équipements de terminaux d'utilisateur dans le groupe.

2. Système de service à poussoir PTT selon la revendication 1, dans lequel :
ledit équipement de terminal d'utilisateur représente l'un quelconque ou plusieurs parmi des équipements de terminaux d'utilisateur fixe, d'utilisateur de téléphone logiciel, d'utilisateur mobile, d'utilisateur de réseau local sans fil, et d'utilisateur de combiné téléphonique prenant en charge le service à poussoir PTT.

3. Système de service à poussoir PTT selon la revendication 2, dans lequel :
ledit utilisateur et ledit réseau d'accès appartiennent à un même opérateur.

4. Système de service à poussoir PTT selon la revendication 3, dans lequel :
ledit système de service à poussoir PTT comprend en outre des utilisateurs et réseaux d'accès appartenant à différents opérateurs, qui sont accessibles par le biais d'une passerelle d'échange entre les réseaux.

5. Système de service à poussoir PTT selon les revendications 2, 3 ou 4, dans lequel :
ledit équipement de commande est configuré de manière à commander un ou plusieurs équipements de passerelle, et à authentifier ledit équipement de terminal d'utilisateur en utilisant des informations d'utilisateur dudit serveur d'application.

6. Procédé destiné à mettre en oeuvre un service poussoir PTT, **caractérisé en ce qu'**il comporte les étapes ci-dessous dans lesquelles :
(a) un utilisateur source sélectionne des utilisateurs de groupes cibles, et envoie une demande d'établissement de service à poussoir PTT à un équipement de commande par le biais d'un réseau d'accès (510) ;
(b) ledit équipement de commande recevant la demande et authentifiant l'utilisateur source, à l'issue de la réussite de l'authentification, distribue une demande d'appel d'établissement de service à poussoir PTT aux utilisateurs de groupes cibles à travers le réseau d'accès (520) ;
(c) ledit équipement de commande demande à un équipement de réseau connexe de distribuer des ressources pour l'utilisateur source et les utilisateurs de groupes cibles, et suite à la réception d'une réponse de réussite à partir d'au moins une partie des utilisateurs de groupes cibles, renvoie le message de demande de réponse à l'utilisateur source (530) ;
(d) ledit équipement de terminal d'utilisateur et l'équipement de passerelle connexe mettent en oeuvre la distribution de ressources, à l'issue de la réponse d'au moins une partie des utilisateurs de groupes cibles, l'utilisateur source et les utilisateurs cibles établissent un canal de flux multimédia à travers le réseau d'accès et l'équipement de passerelle, et l'équipement de passerelle distribue le flux multimédia envoyé par l'utilisateur source à des utilisateurs de groupes cibles respectifs connectés (550) ;
(e) lorsque les utilisateurs de groupes sont en session, ledit équipement de commande transmet et distribue un message de signalisation entre les utilisateurs de groupes, ledit équipement de passerelle reçoit le flux multimédia envoyé à partir de l'équipement de terminal d'utilisateur autorisé à communiqué, par l'intermédiaire du canal de flux multimédia créé, et distribue le flux multimédia à un autre équipement de terminal d'utilisateur dans le groupe (560) ; et
(f) à l'issue de la session, ledit équipement de commande, ledit équipement de passerelle et ledit équipement de terminal d'utilisateurs libèrent les ressources connexes occupées par le service à poussoir PTT (570).

7. Procédé destiné à mettre en oeuvre le service à poussoir PTT selon la revendication 6, dans lequel
dans ladite étape (a), l'utilisateur source acquiert une liste de contacts en cours à partir du serveur d'application, et sélectionne les utilisateurs de groupes cibles du service à poussoir PTT en cours à partir de la liste.

8. Procédé destiné à mettre en oeuvre le service à poussoir PTT selon la revendication 6, dans lequel
dans ladite étape (b), ledit équipement de commande authentifie l'utilisateur source en interrogeant le serveur d'application en ce qui concerne les informations de configuration de l'utilisateur source.

9. Procédé destiné à mettre en oeuvre le service à poussoir PTT selon la revendication 6, dans lequel
dans ladite étape (b), lorsque les utilisateurs de groupes se connectent à deux équipements de passerelles ou plus, respectivement, l'équipement de commande sélectionne un équipement de passerelle, parmi les multiples équipements de passerelle ci-dessus, qui se connecte à la plupart des utilisateurs des utilisateurs de groupes, et établit le canal de flux multimédia, avec les utilisateurs de groupes.

10. Procédé destiné à mettre en oeuvre le service à poussoir PTT selon la revendication 6, dans lequel
au cours du processus de distribution des ressources, ledit équipement de commande acquiert la condition d'affectation de ressources à partir de l'équipement de passerelle, et notifie ensuite la condition d'affectation de ressources à l'utilisateur source et aux utilisateurs de groupes cibles, et acquiert la condition d'affectation de ressources du service à poussoir PTT de cet instant à partir de l'utilisateur source et des utilisateurs de groupes cibles (540).
